# EUROPEAN PATENT SPECIFICATION

(11) **EP 3 608 273 B1**
(45) Date of publication and mention of the grant of the patent: **28.09.2022**
(21) Application number: 18188532.8
(22) Date of filing: 10.08.2018
(51) Int. Cl.: B66B 5/04, B66B 5/22

(54) **ELEVATOR SAFETY GEAR ACTUATION DEVICE**
AUFZUGSICHERHEITSAUSRÜSTUNGBETÄTIGUNGSVORRICHTUNG
DISPOSITIF D'ACTIONNEMENT D'ENGRENAGE DE SÉCURITÉ D'ASCENSEUR

(43) Date of publication of application: 12.02.2020
(73) Proprietor: Otis Elevator Company, Farmington, Connecticut 06032 (US)
(72) Inventor: Sanchex Munoz, Ruben, 28919 Madrid (ES)
(74) Representative: Schmitt-Nilson Schraud Waibel Wohlfrom Patentanwälte Partnerschaft mbB

(56) References cited:
- EP-A1- 3 112 306
- WO-A1-2015/191695
- WO-A1-2017/023926

## Description

The invention relates to an actuation device for an elevator safety gear (elevator safety gear actuation device) according to claim 1 and to an elevator safety gear with such an actuation device according to claim 13. The invention further relates to an elevator system according to claims 14 and 15 comprising an elevator safety gear.

An elevator system according to the state of the art typically comprises at least one elevator car moving between a plurality of landings along a guide member extending in a hoistway, and a driving member configured for driving the elevator car. The elevator system may further include a counterweight moving concurrently and in opposite direction with respect to the elevator car. In order to ensure a safe operation, the elevator system further comprises at least one elevator safety gear which is configured for braking the movement of the elevator car and/or the movement of the counterweight relative to the guide member, such as a guide rail, in an emergency situation, in particular when the movement of the elevator car and/or of the counterweight exceeds a predetermined velocity or acceleration.

The elevator safety gear includes an actuation device which is configured for actuating the elevator safety gear.

WO 2015/191695 A1 discloses a braking system resetting mechanism for a hoisted structure including a guide rail and a brake member. Also included is a brake member actuation mechanism operatively coupled to the brake member and configured to magnetically engage the guide rail to actuate the brake member from a non-braking position to a braking position. Further included is an outer structure having a slot configured to guide the brake member actuation mechanism, wherein the slot includes a first angled region and a second angled region that intersect at an outer location. Also included is a spring loaded lever operatively coupled to the outer structure and configured to engage the brake member actuation mechanism during a resetting operation, wherein the spring loaded lever biases the brake member actuation mechanism toward the outer location of the slot of the outer structure to disengage the brake member actuation mechanism from the guide rail.

It would be beneficial to provide an improved actuation device which ensures safe and reliable operation over a long time of operation and which needs less maintenance than a conventional actuation device.

According to the invention an actuation mechanism for an elevator safety gear is included, wherein the elevator safety gear is configured for braking an elevator car or a counterweight of an elevator system by engaging a braking member with a guide member of the elevator system. The actuation mechanism comprises an engagement element, which is movable between an engaged position in which the engagement element engages with the guide member of the elevator system and a disengaged position in which it does not engage with the guide member. At least two permanent magnets are arranged in a configuration generat-ing a repulsive force between the at least two permanent magnets, said repulsive force urging the engagement element towards the engaged position. The actuation mechanism further comprises at least one electric coil which is configured for generating an electromagnetic force urging the engagement element towards the disengaged position and/or for holding the engagement element in the disengaged position, when an electric current is flowing through the at least one electric coil.

The invention also includes an elevator safety gear comprising a braking device and an actuation device according claim 13.

Exemplary unclaimed embodiments further include an elevator car and/or a counterweight for an elevator system, respectively comprising at least one elevator safety gear with an actuation device according to an exemplary embodiment of the invention.

Exemplary embodiments of the invention also include an elevator system comprising at least one elevator car according to claims 14 and 15.

In an actuation mechanism according to an exemplary embodiment of the invention, the engagement element is urged towards its engaged position by the magnetic forces of permanent magnets.

Thus, no elastic mechanical element, such as a spring, is necessary for urging the engagement element towards the engagement position. Thus, the specific problems of elastic mechanical elements, such as wear, contamination and fatigue, are avoided. In consequence, a reliable actuation mechanism having a long service life and needing only little maintenance is provided.

A number of optional features are set out in the following. These features may be realized in particular embodiments, alone or in combination with any of the other features, unless specified otherwise.

The electromagnetic force generated by the at least one electric coil may be an attractive force attracting the engagement element towards the at least one electric coil against the repulsive force generated by the permanent magnets.

The actuation mechanism may comprise at least two electric coils. The actuation mechanism in particular may comprise a first electric coil configured for moving the engagement element towards the disengaged position and a second electric coil configured for holding the engagement element in the disengaged position. As less force is needed for holding the engagement element than for moving the engagement element, the second electric coil may be adapted to a smaller electric current than the first electric coil. Using a smaller electric current allows saving electrical energy when the engagement element is only held but not moved, which is the normal state of the actuation mechanism. The second coil may have fewer windings than the first coil.

The electric coils may be arranged coaxially with each other resulting in a space-saving arrangement of the electric coils.

The at least two permanent magnets may include at least one permanent magnet which is arranged so that an axis extending between the north-pole and the southpole of said permanent magnet is oriented parallel to the moving direction of the engagement element generating a magnetic force oriented parallel to the moving direction of the engagement element.

Said at least one permanent magnet in particular may be arranged within the at least one electric coil with the axis of said at least one permanent magnet being oriented parallel to, in particular coaxially with, an axis of the electric coil. Such an arrangement allows efficiently compensating the magnetic force of the at least one permanent magnet by an opposing electromagnetic force generated by an electric current flowing through the electric coil.

The at least two permanent magnets may include at least one permanent magnet arranged so that an axis extending between the north pole and the south pole of said permanent magnet is oriented transversely or orthogonally to a moving direction of the engagement element. Such an orientation of the permanent magnet allows an efficient magnetization of a yoke, in particular of a ring-shaped yoke arranged next to or around the at least one permanent magnet.

The actuation mechanism may comprise a stationary element or yoke housing the at least one electric coil and supporting or being formed integrally with at least one of the permanent magnets.

The actuation mechanism may comprise a movable element or yoke supporting or being formed integrally with the engagement element and supporting or being formed integrally with at least one of the permanent magnets.

The elements or yokes in particular may be configured for concentrating the magnetic forces generated by the electric coil and/or by the at least one of the permanent magnet towards the other element or yoke. Concentrating the magnetic forces enhances the efficiency of the actuation mechanism.

At least one of the elements or yokes may have a circular cross-section, in particular a circular cross-section in a plane extending perpendicularly to a moving direction of the engagement element. A circular cross-section allows for an efficient and space-saving arrangement of the electric coil and/or of the permanent magnets. At least one of the permanent magnets may have the shape of a ring or a doughnut matching the circular cross-section of the at least one element or yoke.

Based on the respective circumstances, other geometries may be employed as well.

At least one of the elements or yokes may comprise a cavity, groove or slot configured for accommodating the at least one electric coil and/or at least one of the permanent magnets. A cavity, groove or slot allows arranging the electric coil easily within the respective element or yoke.

In the following, exemplary embodiments of the invention are described in more detail with respect to the enclosed figures:
Figure 1 schematically depicts an elevator system with an elevator safety gear according to an exemplary embodiment of the invention.
Figure 2 shows a perspective view of an elevator car comprising an elevator safety gear according to an exemplary embodiment of the invention.
Figure 3 shows a plane view of an elevator safety gear according to an exemplary embodiment of the invention.
Figures 4 and 5 show perspective views of the elevator safety gear shown in Figure 3, respectively.
Figure 6 shows a plane view of an elevator safety gear according to another exemplary embodiment of the invention.
Figures 7 and 8 show perspective views of the elevator safety gear shown in Figure 6, respectively.
Figure 9 shows a perspective sectional view of an actuation mechanism according to an exemplary embodiment of the invention.
Figure 10 shows a planar sectional view of the actuation mechanism shown in Figure 9.

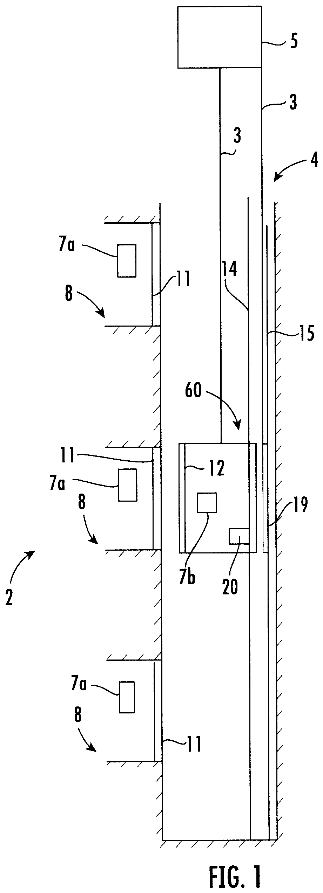

Figure 1 schematically depicts an elevator system 2 according to an exemplary embodiment of the invention.

The elevator system 2 includes an elevator car 60 movably arranged within a hoistway 4 extending between a plurality of landings 8. The elevator car 60 in particular is movable along a plurality of car guide members 14, such as guide rails, extending along the vertical direction of the hoistway 4. Only one of said car guide members 14 is visible in Figure 1.

Although only one elevator car 60 is depicted in Figure 1, the skilled person will understand that exemplary embodiments of the invention may include elevator systems 2 having a plurality of elevator cars 60 moving in one or more hoistways 4.

The elevator car 60 is movably suspended by means of a tension member 3. The tension member 3, for example a rope or belt, is connected to a drive unit 5, which is configured for driving the tension member 3 in order to move the elevator car 60 along the height of the hoistway 4 between the plurality of landings 8, which are located on different floors.

Each landing 8 is provided with a landing door 11, and the elevator car 60 is provided with a corresponding elevator car door 12 for allowing passengers to transfer between a landing 8 and the interior of the elevator car 60 when the elevator car 60 is positioned at the respective landing 8.

The exemplary embodiment of the elevator system 2 shown in Figure 1 employs a 1:1 roping for suspending the elevator car 60. The skilled person, however, easily understands that the type of the roping is not essential for the invention and that different kinds of roping, e.g. a 2:1 roping, may be used as well. The elevator system 2 may have a machine room or may be a machine room-less elevator system. The elevator system 2 may use a tension member 3, as it is shown in Figure 1, or it may be an elevator system without a tension member 3. The drive 5 may be any form of drive used in the art, e.g. a traction drive, a hydraulic drive or a linear drive.

The elevator system 2 shown in Figure 1 further includes a counterweight 19 attached to the tension member 3 and moving concurrently and in opposite direction with respect to the elevator car 6 along at least one counterweight guide member 15. The skilled person will understand that the invention may be applied also to elevator systems 2 which do not comprise a counterweight 19.

The tension member 3 may be a rope, e.g. a steel wire rope, or a belt. The tension member 3 may be uncoated or may have a coating, e.g. in the form of a polymer jacket. In a particular embodiment, the tension member 3 may be a belt comprising a plurality of polymer coated steel cords (not shown). The elevator system 2 may have a traction drive including a traction sheave for driving the tension member 3.

The drive unit 5 is controlled by an elevator control unit (not shown) for moving the elevator car 60 along the hoistway 4 between the different landings 8.

Input to the control unit may be provided via landing control panels 7a, which are provided on each landing 8 close to the landing doors 11, and/or via an elevator car control panel 7b, which is provided inside the elevator car 60.

The landing control panels 7a and the elevator car control panel 7b may be connected to the elevator control unit by means of electric wires, which are not shown in Figure 1, in particular by an electric bus, such as a field bus / CAN-bus, or by means of wireless data connections.

The elevator car 60 is equipped with at least one elevator safety gear 20, which is illustrated schematically at the elevator car 60. Alternatively or additionally, the counterweight 19 may be equipped with at least one elevator safety gear 20. An elevator safety gear 20 attached to the counterweight 19, however, is not shown in Figure 1.

The elevator safety gear 20 is operable to brake or at least assist in braking (i.e. slowing or stopping the movement) of the elevator car 60 relative to a car guide member 14 by engaging with the car guide member 14. In the following, the structure and the operating principle of an elevator safety gear 20 according to an exemplary embodiment of the invention will be described.

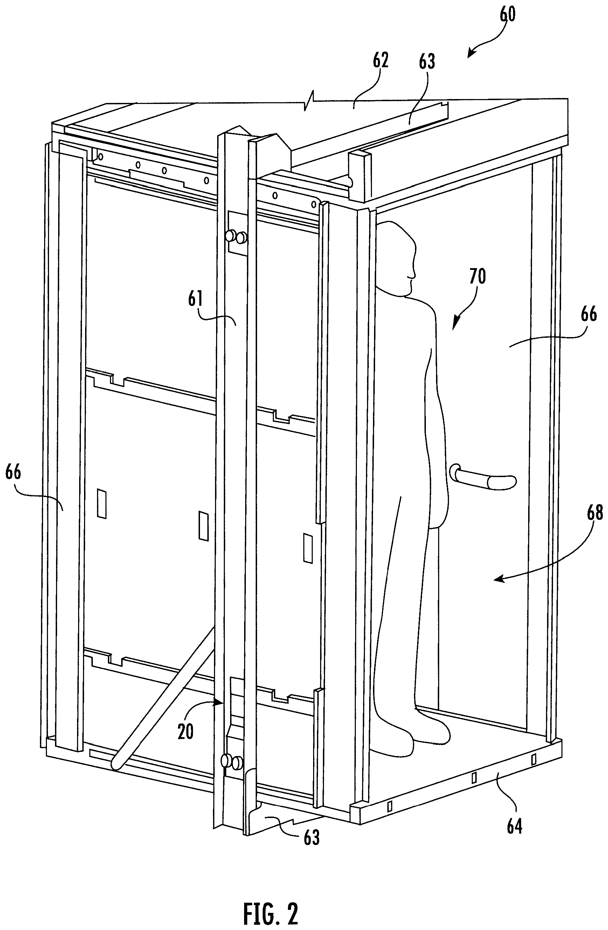

Figure 2 is an enlarged perspective view of an elevator car 60 according to an unclaimed embodiment of the invention. The elevator car 60 comprises a structural frame comprising vertically extending uprights 61 and crossbars 63 extending horizontally between the uprights 61. Only one upright 61 is visible in Figure 2.

The elevator car 60 further includes a car roof 62, a car floor 64 and a plurality of car side walls 66. In combination, the car roof 62, the car floor 64 and the plurality of side walls 66 define an interior space 68 for accommodating and carrying passengers 70 and/or cargo (not shown).

An elevator safety gear 20 according to an exemplary embodiment of the invention is attached to an upright 61 of the elevator car 60.

Although only one elevator safety gear 20 is depicted in Figures 1 and 2, respectively, the skilled person will understand that a plurality of safety gear assemblies 20 may be mounted to a single elevator car 60. In particular, in a configuration in which the elevator system 2 comprises a plurality of car guide members 14, an elevator safety gear 20 may be associated with each car guide member 14.

Alternatively or additionally, two or more elevator safety gears 20 may be provided on top of each other at the same upright 61 of the elevator car 60 in order to engage with the same car guide member 14.

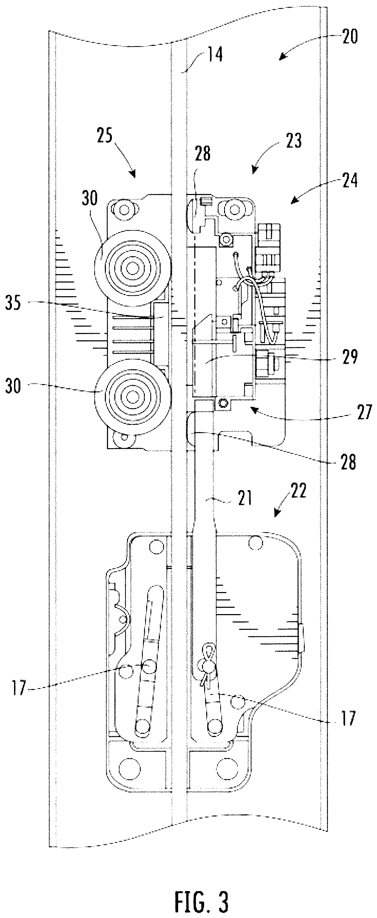

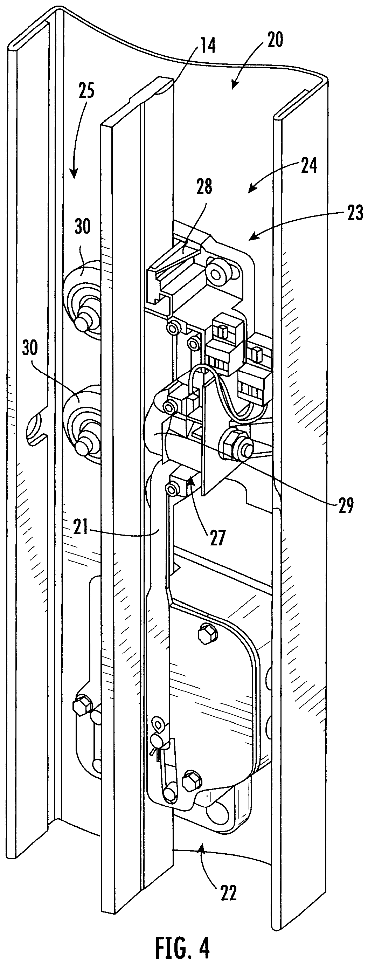

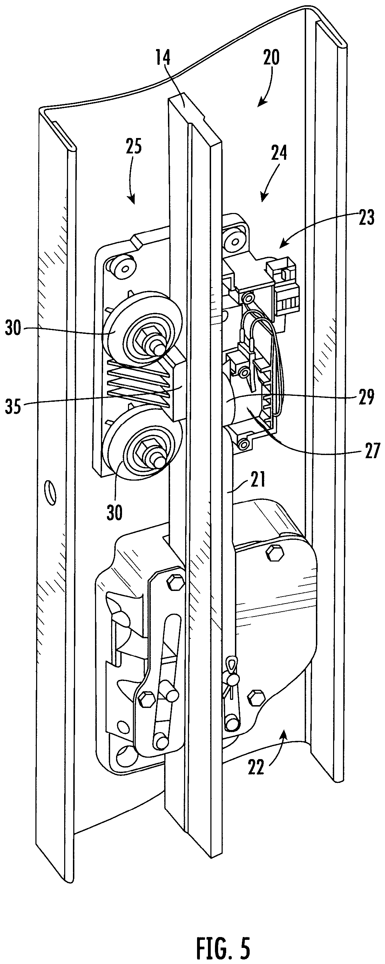

An elevator safety gear 20 according to an exemplary embodiment of the invention is depicted in more detail in Figures 3 to 5. Figure 3 shows a plane view of the elevator safety gear 20. Figures 4 and 5 show perspective views of the elevator safety gear 20 from two different angles.

The elevator safety gear 20 comprises a braking device 22 and an actuation device 24. The braking device 22 comprises at least one braking member 17 configured for engaging with the car guide member 14 in order to brake the movement of the elevator car 60 along the car guide member 14. The braking device 22 is of the self-locking type, e.g. employing a wedge-type construction of the at least one braking member 17.

In the embodiment depicted in Figure 3, the braking device 22 and the actuation device 24 are spaced apart from each other in a longitudinal (vertical) direction along the car guide member 14. However, other arrangements of the braking device 22 and the actuation device 24 are possible as well. The braking device 22 and the actuation device 24 in particular may be integrated with each other forming a combined actuation and braking device.

The braking device 22 and the actuation device 24 are mechanically coupled with each other by an actuation rod 21 extending along the longitudinal direction, i.e. parallel to the car guide member 14. The actuation device 24 is configured for actuating the braking device 22 via the actuation rod 21.

The braking device 22 is not discussed in more detail here. An example of a self-locking braking device 22 as it may be employed in an elevator safety gear 20 according to an exemplary embodiment of the invention is described in detail in the European patent application 17 192 555.5, which has been published as EP 3 459 895 A1.

The actuation device 24 comprises a first member 23 shown on the right side of Figures 3 to 5, and a second member 25 shown on the left side of Figures 3 to 5, respectively. The first and second members 23, 25 are arranged opposite to each other defining a gap. The car guide member 14 extends through said gap in the longitudinal direction.

The first and second members 23, 25 are rigidly connected with each other so that they are not movable with respect to each other. The first and second members 23, 25 in particular may be formed integrally with each other representing two portions of the same element.

In the disengaged (released) state, the braking device 22 and the actuation device 24 do not engage with the car guide member 14. This allows the elevator safety gear 20 to move together with the elevator car 60 along the car guide member 14 in the longitudinal direction.

The first member 23 comprises a movable engagement element 29, which in particular is movable in a direction transverse to the longitudinal direction from its disengaged position into an engaged position. The engagement element 29 in particular may be movable in a horizontal direction, i.e. orthogonally to the longitudinal direction. When arranged in the engaged position, the engagement element 29 engages with the car guide member 14. The friction between the car guide member 14 and the engagement element 29 arranged in the engaged position generates a force acting onto the actuation rod 21 activating the braking device 22.

The actuation device 24 comprises an activation mechanism 27 configured for activating the actuation device 20 by causing the engagement element 29 to move from its disengaged position into an engaged position in which it engages with the car guide member 14.

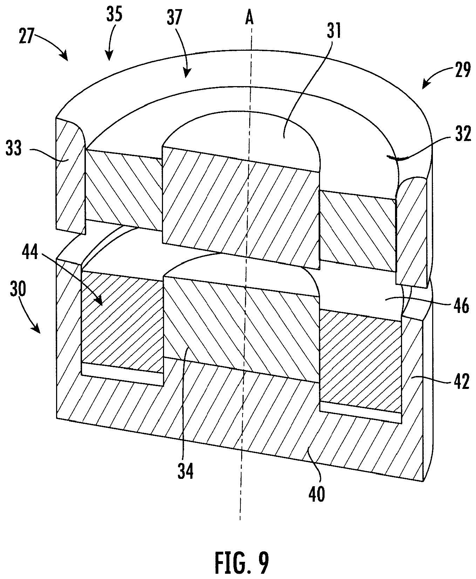

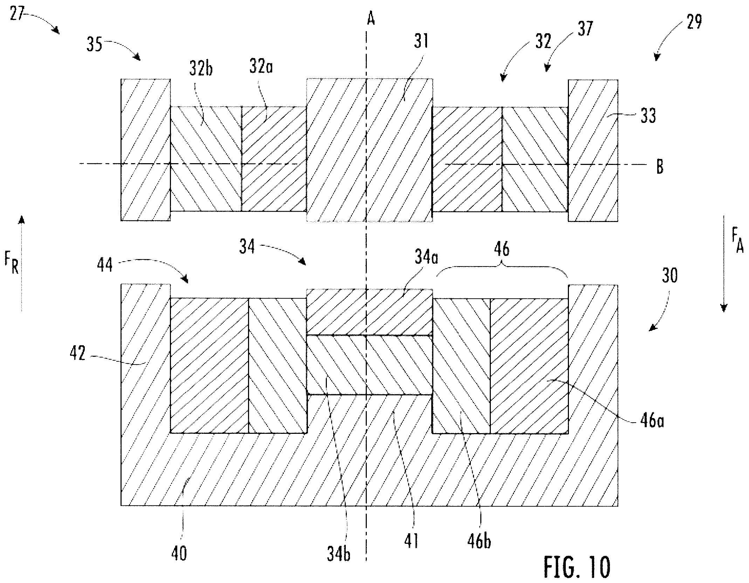

In the embodiment shown in Figures 3 to 5, the activation mechanism 27 is provided at the first member 23. The details of the activation mechanism 27 will be discussed further below with reference to Figures 9 and 10.

The first member 23 comprises two stopper elements 28 spaced apart from each other in the longitudinal direction. The engagement element 29 is arranged between the two stopper elements 23.

The second member 25 supports two rollers 30. When the elevator safety gear 20 moves along the car guide member 14 in the longitudinal direction, the rollers 30 are configured for rolling along the guide member 14 extending through the gap.

The rollers 30 reduce the friction between the elevator safety gear 20, in particular the second member 25, and the car guide member 14 when the actuation device 24 is not activated.

The rollers 30 may be made at least partially from a synthetic material, in particular a durable material, which allows for a low friction between the car guide member 14 and the rollers 30. The rollers 30 in particular may be made at least partially from a rubber material. Further, more or less than two rollers 30 may be used.

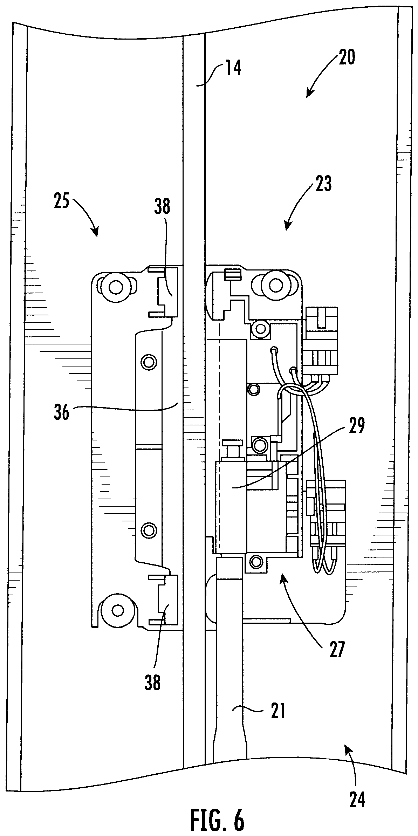

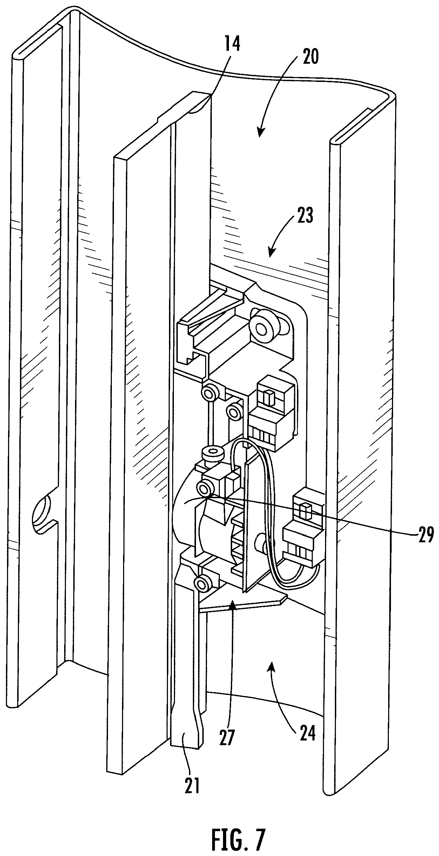

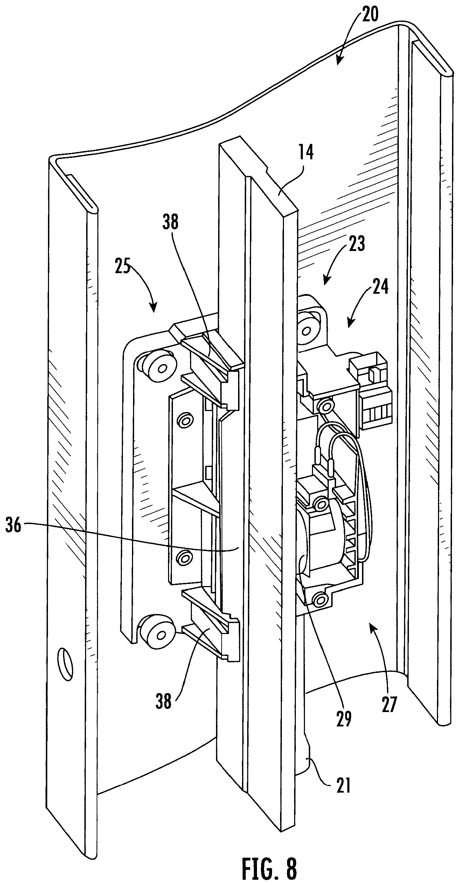

An elevator safety gear 20 according to another exemplary embodiment of the invention is depicted in Figures 6 to 8. Figure 6 shows a plane view of the elevator safety gear 20. Figures 7 and 8 show perspective views from two different angles, respectively.

Only the car guide member 14, the actuation device 24 and the activation rod 21 are depicted in Figures 6 to 8, i.e. the braking device 22, which may be identical to the braking device depicted in Figures 3 to 5, is not shown.

Similar to the embodiment depicted in Figures 3 to 5, the actuation device 24 comprises a first member 23 and a second member 25 forming a gap in between, and the car guide member 14 extends through said gap.

The first member 23 is identical with the first member 23 of the embodiment depicted in Figures 3 to 5. It therefore is not discussed in detail again. Reference is made to the respective description of Figures 3 to 5. In the following, only the differences between the two embodiments are described.

In the embodiment depicted in Figures 6 to 8, the second member 25 does not comprise rollers 30. Instead, the second member 25 comprises a low friction element 36 extending in the longitudinal direction parallel to the car guide member 14.

For reducing the friction between the second member 25 and the car guide member 14 the surface of the low friction element 36 facing the car guide member 14 is provided as a low friction surface.

In particular, a coating having a low friction coefficient, e.g. a coating based on at least one of polytetrafluoroethylene (PTFE), ghraphite, polyethylene (PE), ultrahigh molecular weight polyethylene (UHMWPE), graphene, polyether ether ketone (PEEK), may be applied to the surface of the low friction element 36 facing the car guide member 14.

In the embodiment depicted in Figures 6 to 8, the second member 25 comprises two support elements 38 which are spaced apart from each other in the longitudinal direction. The low friction element 36 is attached to and extends in between said support elements 38.

In order to allow for an easy replacement of the low friction element 36, the low friction element 36 may be attached to support elements 38 using a fixing mechanism which allows for easily detaching the low friction element 36 from the support elements 38. The fixing mechanism in particular may be a snap-on / clamping mechanism.

The use of two support elements 38 is only exemplarily and more or less than two support elements 38 may be used. Similarly, more than one low friction element 36 may be employed.

Figure 9 shows a perspective schematic sectional view of an actuation mechanism 27 according to an exemplary embodiment of the invention.

The actuation mechanism 27 comprises the engagement element 29 and a stationary actuation member 30. The actuation member 30 is securely attached to the first member 23, which is not shown in Figure 9.

The engagement element 29 is movable with respect to the actuation member 30 along an axis A between an engaged position, in which the engagement element 29 engages with the guide member 14 (not shown in Figure 9), and a disengaged position, in which the engagement element 29 does not engage with the guide member 14.

In the embodiment depicted in Figure 9, the engagement element 29 and the actuation member 30 both have a cylindrical shape around the axis A. The engagement element 29 and the actuation member 30 have basically the same radius with respect to axis A.

A first, ring-shaped, permanent magnet (movable permanent magnet) 32 is arranged within the engagement element 29 in a cavity 37 formed between a cylindrical metallic core 31 provided at the center of the engagement element 29 and a circular outer circumferential wall 33. The cylindrical metallic core 31 and the outer circumferential wall 33, in combination, constitute a movable yoke 35.

A second, cylindrical shaped, permanent magnet (stationary permanent magnet) 34 is provided at the center of the actuation member 30.

Axis A extends through the center of the first and second permanent magnets 32, 34, respectively.

The actuation member 30 further includes a metallic stationary yoke 40 having a circular circumferential outer wall 42. A circular groove 44 accommodating a ring-shaped electric coil 46 is formed in the stationary yoke 40 between the circumferential outer wall 42 and the stationary permanent magnet 34.

Although in the exemplary embodiment depicted in Figure 9 each of the engagement element 29, the actuation member 30, the permanent magnets 32, 34, and the electric coil 46 has a circular cross-section, respectively, the skilled person understands that this is only exemplarily and that other geometrical shapes may be employed as well. The geometrical shapes of the engagement element 29, the actuation member 30, the permanent magnets 32, 34, and the electric coil 46 in particular may be adapted to the specific geometry of the actuation device 24 in which they are employed.

Figure 10 depicts a sectional view of the engagement element 29 and the actuation member 30 of the actuation mechanism 27 shown in Figure 9. The features which have been discussed with reference to Figure 9 are denoted with the same reference signs and will not be discussed in detail again.

In Figure 10, the poles 32a, 32b, 34a, 34b of the permanent magnets 32, 34 are visualized by different hatchings.

Figure 10 shows that the ring-shaped movable permanent magnet 32 is magnetized in a radial direction, i.e. an axis B extending between the poles 32a, 32b of the movable permanent magnet 32 extends in the radial direction orthogonally to the axis A, with a first pole 32a facing the cylindrical metallic core 31 at the center of the engagement element 29, and an opposing second pole 32b facing the outer circumferential wall 33 of the engagement element 29.

The stationary permanent magnet 34 arranged at the center of the actuation member 30 is magnetized parallel to axis A, i.e. orthogonally to a plane in which the movable permanent magnet 32 extends. A first pole 34a of the stationary permanent magnet 34 faces the cylindrical metallic core 31 of the engagement element 29, and an opposing second pole 34b faces a center portion 41 of the stationary yoke 40.

The permanent magnets 32, 34 are oriented such that poles 32a, 32b, 34a, 34b of the same kind, i.e. two north-poles or two south-poles, are oriented towards the core 31 of the engagement element 29 generating a repulsive force FR between the two yokes 35, 40 urging the engagement element 29 away from the actuation member 30 and towards the guide member 14, which is not shown in Figures 9 and 10. In the orientation of the activation mechanism 27 as it is depicted in Figures 9 and 10, the repulsive force F_{R} urges the engagement element 29 upwards.

In the exemplary embodiment depicted in Figure 10, the ring-shaped electric coil 46 provided in the groove 44 formed between the stationary permanent magnet 34 and the circular outer wall 42 of the stationary yoke 40 includes two electric coils 46a, 46b. The ring-shaped electric coil 46 in particular includes an outer electric coil 46a and an inner electric coil 46b. Both electric coils 46a, 46b are coaxially wound around the axis A. The inner electric coil 46b is arranged inside the outer electric coil 46a in the radial direction, i.e. between the outer electric coil 46a and the stationary permanent magnet 34.

When an electric current is flowing through, both electric coils 46a, 46b are configured for generating an electromagnetic field, which, when interacting with the movable permanent magnet 32, results in an attractive electromagnetic force FA acting against the repulsive force F_{R} generated by the interaction of the permanent magnets 32, 34.

I.e. by flowing a sufficiently large electric current through at least one of the electric coils 46a, 46b, the engagement element 29 may be moved from its engaged position towards a disengaged position, in which the engagement element 29 does not contact the guide member 14. By flowing a smaller electric current through at least one of the electric coils 46a, 46b, the engagement element 29 may be held in said disengaged position allowing the elevator car 60 to move freely along the guide member 14.

In the embodiment depicted in Figure 10, the outer electric coil 46a is configured for moving the engagement element 29 from its engaged position towards the disengaged position; and the inner electric coil 46b is configured for holding the engagement element 29 in the disengaged position. As a smaller force is necessary for holding the engagement element 29 than for moving the engagement element 29, the inner electric coil 46b, which is configured for holding the engagement element 29 in the disengaged position, may be smaller and/or comprise fewer windings than the outer electric coil 46b, which is configured for moving the engagement element 29 from its engaged position towards the disengaged position.

During normal operation of the elevator system 2 an electrical current flowing through the inner electric coil 46b generates an attractive electromagnetic force FA counterbalancing the repulsive force F_{R} generated by the permanent magnets 32, 34 for holding the engagement element 29 in a disengaged position allowing free movement of the elevator car 60 along the guide member 14.

In an emergency situation, the electric current flowing through the inner electric coil 46b is switched-off. As a result, the engagement element 29 is urged by the repulsive force F_{R} generated by the permanent magnets 32, 34 against the guide member 14 where it engages with said guide member 14 and, in consequence, activates the braking device 22 of the elevator safety gear 20 for braking the movement of the elevator car 60.

In order to allow the elevator car 60 to move again after the emergency situation has been overcome, an electrical current is caused to flow through the larger outer electric coil 46a or through both electric coils 46a, 46b for generating an electromagnetic attractive force FA which is sufficiently strong for moving the engagement element 29 against the repulsive force FR generated by the permanent magnets 32, 34 from its engaged position back into the disengaged position.

After the engagement element 29 has reached the disengaged position, the electrical current flowing though the larger electric coil 46a is switched off, and a (smaller) electric current is caused to flow only through the smaller electric coil 46b for holding the engagement element 29 in the disengaged position, in which the engagement element 29 does not activate the braking device 22 but allows the elevator car 60 to move freely along the guide member 14.

Although the exemplary embodiment depicted in Figure 10 comprises two electric coils 46a, 46b dedicated for moving and holding the engagement element 29, respectively, the skilled person understands that providing two separate electric coils 46a, 46b is not mandatory, but that a simplified actuation mechanism 27 comprising only a single electric coil 46a, 46b may be used as well. Similarly, a configuration comprising more than two electric coils 46a, 46b may be employed.

Further, although only elevator safety gears 20 mounted to an elevator car 60 have been described with reference to the figures, the skilled person understands that an actuation device 24 according to an exemplary embodiment of the invention similarly may be employed in an elevator safety gear 20 which is mounted to a counterweight 19 of an elevator system 2.

It is intended that the invention shall not be limited to the particular embodiment disclosed, but that the invention includes all embodiments falling within the scope of the dependent claims.

### References

- 2: elevator system
- 3: tension member
- 4: hoistway
- 5: drive unit
- 7a: landing control panel
- 7b: elevator car control panel
- 8: landing
- 11: landing door
- 12: elevator car door
- 14: car guide member
- 15: counterweight guide member
- 17: braking member
- 19: counterweight
- 20: elevator safety gear
- 21: actuation rod
- 22: braking device
- 23: first member
- 24: actuation device
- 25: second member
- 27: activation mechanism
- 28: stopper element
- 29: engagement element
- 30: actuation member
- 31: core of the engagement element
- 32: first / movable permanent magnetic
- 33: outer circumferential wall of the engagement element
- 34: second / stationary permanent magnetic
- 35: movable yoke
- 36: low friction element
- 37: cavity within the engagement element
- 38: support element
- 40: stationary yoke
- 41: center portion
- 42: circumferential outer wall of the yoke
- 44: groove
- 46: electric coil
- 46a: outer electric coil
- 46b: inner electric coil
- 60: elevator car
- 61: upright
- 62: car roof
- 63: crossbar
- 64: car floor
- 66: car side wall
- 68: interior space of the elevator car
- 70: passenger

## Claims

1. Actuation mechanism (27) for an elevator safety gear (20), the elevator safety gear (20) being configured for braking an elevator car (60) and/or a counterweight (19) of an elevator system (2) by engaging a braking member (17) with a guide member (14, 15) of the elevator system (2), wherein the actuation mechanism (27) comprises:
an engagement element (29), which is movable between an engaged position in which it engages with the guide member (14, 15) of the elevator system (2) and a disengaged position in which it does not engage with the guide member (14, 15) of the elevator system (2);
at least two permanent magnets (32, 34) arranged in a configuration generating a repulsive force (F_{R}) between the at least two permanent magnets (32, 34), said repulsive force (F_{R}) urging the engagement element (29) towards the engaged position; and
at least one electric coil (46, 46a, 46b) configured for generating an electromagnetic force urging the engagement element (29) towards the disengaged position and/or for holding the engagement element (29) in the disengaged position, when an electric current is flowing through the at least one electric coil (46, 46a, 46b).

2. Actuation mechanism (27) according to claim 1, wherein the electromagnetic force generated by the at least one electric coil (46, 46a, 46b) is an attractive electromagnetic force (FA) attracting the engagement element (29) towards the at least one electric coil (46, 46a, 46b).

3. Actuation mechanism (27) according to claim 1 or 2, comprising at least two electric coils (46a, 46b), in particular a first electric coil (46a) configured for moving the engagement element (29) into the disengaged position and a second electric coil (46b) configured for holding the engagement element (29) in the disengaged position.

4. Actuation mechanism (27) according to claim 3, wherein the electric coils (46a, 46b) are arranged coaxially with each other.

5. Actuation mechanism (27) according to any of the preceding claims, wherein the at least two permanent magnets (32, 34) include at least one permanent magnet (32) arranged so that an axis (A) extending between the poles (32a, 32b) of said permanent magnet (32) is oriented parallel to the moving direction of the engagement element (29).

6. Actuation mechanism (27) according to claim 5, wherein said at least one permanent magnet (32) is arranged within the at least one electric coil (46, 46a, 46b), wherein the axis (A) of said at least one permanent magnet (32) in particular is oriented parallel to, in particular coaxially with, an axis (A) of the coil (46, 46a, 46b).

7. Actuation mechanism (27) according to any of the preceding claims, wherein the at least two permanent magnets (32, 34) include at least one permanent magnet (34) arranged in a configuration in which an axis (B) extending between the poles (34a, 34b) of said permanent magnet (34) is oriented transversely or orthogonally to a moving direction of the engagement element (29).

8. Actuation mechanism (27) according to any of the preceding claims, comprising a stationary element (30) or yoke (40) housing the at least one electric coil (46, 46a, 46b) and supporting, or being formed integrally with, at least one of the permanent magnets (32, 34).

9. Actuation mechanism (27) according to any of the preceding claims, comprising a movable element (29) or yoke (35) supporting or being formed integrally with the engagement element (29) and supporting or being formed integrally with at least one of the permanent magnets (32, 34).

10. Actuation mechanism (27) according to claim 8 or 9, wherein at least one of the elements (29, 30) or yokes (35, 40) has a circular cross-section, in particular in a plane extending perpendicularly to a moving direction of the engagement element (29).

11. Actuation mechanism (27) according to any of claims 8 to 10, wherein at least one of the elements (29, 30) or yokes (35, 40) has a cavity (37) or groove (44) configured for accommodating the at least one electric coil (46, 46a, 46b) and/or at least one of the permanent magnets (32, 34).

12. Actuation mechanism (27) according to any of the preceding claims, wherein at least one of the permanent magnets (32, 34) has the shape of a ring or a doughnut.

13. Elevator safety gear (20), comprising:
a braking device (22) configured for braking an elevator car (60) by engaging with a guide member (14, 15) of an elevator system (2); and
an actuation mechanism (27) according to any of the preceding claims;
wherein the actuation mechanism (27) is mechanically coupled with the braking device (22) allowing the actuation mechanism (27) to trigger the braking device (22) by engaging the engagement element (29) with a guide member (14, 15) of the elevator system (2).

14. Elevator system (2), comprising:
at least one elevator car (60) configured for moving along at least one guide member (14) extending along a hoistway (4); and
at least one elevator safety gear (20) according to claim 13;
wherein the elevator safety gear (20) is attached to the counterweight (19) for braking the movement of the at least one elevator car (60).

15. Elevator system (2), comprising:
at least one elevator car (60) configured for moving along at least one car guide member (14, 15) extending along a hoistway (4);
at least one counterweight (19) moving concurrently and in opposite direction with respect to the elevator car (60) along at least guide member (15) extending along a hoistway (4); and
at least one elevator safety gear (20) according to claim 13;
wherein the elevator safety gear (20) is attached to the at least one counterweight (19) for braking the movement of the at least one counterweight (19).

## Patentansprüche

1. Betätigungsmechanismus (27) für eine Aufzugsicherheitsausrüstung (20), wobei die Aufzugsicherheitsausrüstung (20) zum Abbremsen einer Aufzugskabine (60) und/oder eines Gegengewichts (19) eines Aufzugsystems (2) konfiguriert ist, indem ein Bremselement (17) mit einem Führungselement (14, 15) des Aufzugsystems (2) in Eingriff genommen wird, wobei der Betätigungsmechanismus (27) Folgendes umfasst:
ein Eingriffselement (29), das zwischen einer Eingriffsposition, in der es mit dem Führungselement (14, 15) des Aufzugsystems (2) in Eingriff steht, und einer gelösten Position, in der es nicht mit dem Führungselement (14, 15) des Aufzugsystems (2) in Eingriff steht, bewegbar ist;
zumindest zwei Permanentmagnete (32, 34), die in einer Konfiguration angeordnet sind, die eine Abstoßungskraft (F_{R}) zwischen den zumindest zwei Permanentmagneten (32, 34) erzeugt, wobei die Abstoßungskraft (F_{R}) das Eingriffselement (29) in Richtung der Eingriffsposition drängt; und
zumindest eine elektrische Spule (46, 46a, 46b), die zum Erzeugen einer elektromagnetischen Kraft, die das Eingriffselement (29) in Richtung der gelösten Position drängt, und/oder zum Halten des Eingriffselements (29) in der gelösten Position konfiguriert ist, wenn ein elektrischer Strom durch die zumindest eine elektrische Spule (46, 46a, 46b) fließt.

2. Betätigungsmechanismus (27) nach Anspruch 1, wobei. die elektromagnetische Kraft, die durch die zumindest eine elektrische Spule (46, 46a, 46b) erzeugt wird, eine anziehende elektromagnetische Kraft (F_{A}) ist, die das Eingriffselement (29) in Richtung der zumindest einen elektrischen Spule (46, 46a, 46b) zieht.

3. Betätigungsmechanismus (27) nach Anspruch 1 oder 2, umfassend zumindest zwei elektrische Spulen (46a, 46b), insbesondere eine erste elektrische Spule (46a), die zum Bewegen des Eingriffselements (29) in die gelöste Position konfiguriert ist, und eine zweite elektrische Spule (46b), die zum Halten des Eingriffselements (29) in der gelösten Position konfiguriert ist.

4. Betätigungsmechanismus (27) nach Anspruch 3, wobei die elektrischen Spulen (46a, 46b) koaxial zueinander angeordnet sind.

5. Betätigungsmechanismus (27) nach einem der vorhergehenden Ansprüche, wobei die zumindest zwei Permanentmagnete (32, 34) zumindest einen Permanentmagneten (32) beinhalten, der angeordnet ist, sodass eine Achse (A), die sich zwischen den Polen (32a, 32b) des Permanentmagneten (32) erstreckt, parallel zu der Bewegungsrichtung des Eingriffselements (29) ausgerichtet ist.

6. Betätigungsmechanismus (27) nach Anspruch 5, wobei der zumindest eine Permanentmagnet (32) innerhalb der zumindest einen elektrischen Spule (46, 46a, 46b) angeordnet ist, wobei die Achse (A) des zumindest einen Permanentmagneten (32) insbesondere parallel zu, insbesondere koaxial zu einer Achse (A) der Spule (46, 46a, 46b) ausgerichtet ist.

7. Betätigungsmechanismus (27) nach einem der vorhergehenden Ansprüche, wobei die zumindest zwei Permanentmagnete (32, 34) zumindest einen Permanentmagneten (34) beinhalten, der in einer Konfiguration angeordnet ist, in der eine Achse (B), die sich zwischen den Polen (34a, 34b) des Permanentmagneten (34) erstreckt, quer oder orthogonal zu einer Bewegungsrichtung des Eingriffselements (29) ausgerichtet ist.

8. Betätigungsmechanismus (27) nach einem der vorhergehenden Ansprüche,
umfassend ein stationäres Element (30) oder Joch (40), das die zumindest eine elektrische Spule (46, 46a, 46b) aufnimmt und zumindest einen der Permanentmagnete (32, 34) stützt oder einstückig damit gebildet ist.

9. Betätigungsmechanismus (27) nach einem der vorhergehenden Ansprüche,
umfassend ein bewegliches Element (29) oder Joch (35), welches das Eingriffselement (29) stützt oder einstückig damit gebildet ist und zumindest einen der Permanentmagnete (32, 34) stützt oder einstückig damit gebildet ist.

10. Betätigungsmechanismus (27) nach Anspruch 8 oder 9, wobei zumindest eines der Elemente (29, 30) oder Joche (35, 40) einen kreisförmigen Querschnitt aufweist, insbesondere in einer Ebene, die sich senkrecht zu einer Bewegungsrichtung des Eingriffselements (29) erstreckt.

11. Betätigungsmechanismus (27) nach einem der Ansprüche 8 bis 10, wobei zumindest eines der Elemente (29, 30) oder Joche (35, 40) einen Hohlraum (37) oder eine Nut (44) aufweist, der/die zum Aufnehmen der zumindest einen elektrischen Spule (46, 46a, 46b) und/oder von zumindest einem der Permanentmagnete (32, 34) konfiguriert ist.

12. Betätigungsmechanismus (27) nach einem der vorhergehenden Ansprüche, wobei zumindest einer der Permanentmagnete (32, 34) die Form eines Rings oder eines Donuts aufweist.

13. Aufzugsicherheitsausrüstung (20), umfassend:
eine Bremsvorrichtung (22), die zum Abbremsen einer Aufzugskabine (60) konfiguriert ist, indem sie ein Führungselement (14, 15) eines Aufzugsystems (2) in Eingriff nimmt; und
einen Betätigungsmechanismus (27) nach einem der vorhergehenden Ansprüche;
wobei der Betätigungsmechanismus (27) mechanisch mit der Bremsvorrichtung (22) gekoppelt ist, wodurch dem Betätigungsmechanismus (27) ermöglicht wird, die Bremsvorrichtung (22) auszulösen, indem das Eingriffselement (29) mit einem Führungselement (14, 15) des Aufzugsystems (2) in Eingriff genommen wird.

14. Aufzugsystem (2), umfassend:
zumindest eine Aufzugskabine (60), die zum Bewegen entlang zumindest eines Führungselements (14) konfiguriert ist, das sich entlang eines Aufzugsschachts (4) erstreckt; und
zumindest eine Aufzugsicherheitsausrüstung (20) nach Anspruch 13;
wobei die Aufzugsicherheitsausrüstung (20) an dem Gegengewicht (19) angebracht ist, um die Bewegung der zumindest einen Aufzugskabine (60) abzubremsen.

15. Aufzugsystem (2), umfassend:
zumindest eine Aufzugskabine (60), die zum Bewegen entlang zumindest eines Kabinenführungselements (14, 15) konfiguriert ist, das sich entlang eines Aufzugsschachts (4) erstreckt;
zumindest ein Gegengewicht (19), das sich gleichzeitig und in entgegengesetzter Richtung in Bezug auf die Aufzugskabine (60) entlang zumindest eines Führungselements (15) bewegt, das sich entlang eines Aufzugsschachts (4) erstreckt; und
zumindest eine Aufzugsicherheitsausrüstung (20) nach Anspruch 13;
wobei die Aufzugsicherheitsausrüstung (20) an dem zumindest einen Gegengewicht (19) angebracht ist, um die Bewegung des zumindest einen Gegengewichts (19) abzubremsen.

## Revendications

1. Mécanisme d'actionnement (27) pour un équipement de sécurité d'ascenseur (20), l'équipement de sécurité d'ascenseur (20) étant configuré pour freiner une cabine d'ascenseur (60) et/ou un contrepoids (19) d'un système d'ascenseur (2) en mettant en prise un élément de freinage (17) avec un élément de guidage (14, 15) du système d'ascenseur (2), dans lequel le mécanisme d'actionnement (27) comprend :
un élément de mise en prise (29), qui est mobile entre une position en prise dans laquelle il vient en prise avec l'élément de guidage (14, 15) du système d'ascenseur (2) et une position hors prise dans laquelle il ne vient pas en prise avec l'élément de guidage (14, 15) du système d'ascenseur (2) ;
au moins deux aimants permanents (32, 34) agencés dans une configuration générant une force de répulsion (F_{R}) entre les au moins deux aimants permanents (32, 34), ladite force de répulsion (F_{R}) poussant l'élément de mise en prise (29) vers la position en prise ; et
au moins une bobine électrique (46, 46a, 46b) configurée pour générer une force électromagnétique poussant l'élément de mise en prise (29) vers la position hors prise et/ou pour maintenir l'élément de mise en prise (29) dans la position hors prise, lorsqu'un courant électrique circule à travers l'au moins une bobine électrique (46, 46a, 46b).

2. Mécanisme d'actionnement (27) selon la revendication 1, dans lequel la force électromagnétique générée par l'au moins une bobine électrique (46, 46a, 46b) est une force électromagnétique d'attraction (F_{A}) attirant l'élément de mise en prise (29) vers l'au moins une bobine électrique (46, 46a, 46b).

3. Mécanisme d'actionnement (27) selon la revendication 1 ou 2, comprenant au moins deux bobines électriques (46a, 46b), en particulier une première bobine électrique (46a) configurée pour déplacer l'élément de mise en prise (29) dans la position hors prise et une seconde bobine électrique (46b) configurée pour maintenir l'élément de mise en prise (29) dans la position hors prise.

4. Mécanisme d'actionnement (27) selon la revendication 3, dans lequel les bobines électriques (46a, 46b) sont disposées coaxialement l'une avec l'autre.

5. Mécanisme d'actionnement (27) selon l'une quelconque des revendications précédentes, dans lequel les au moins deux aimants permanents (32, 34) comportent au moins un aimant permanent (32) agencé de sorte qu'un axe (A) s'étendant entre les pôles (32a, 32b) dudit aimant permanent (32) est orienté parallèlement à la direction de déplacement de l'élément de mise en prise (29).

6. Mécanisme d'actionnement (27) selon la revendication 5, dans lequel ledit au moins un aimant permanent (32) est agencé à l'intérieur de l'au moins une bobine électrique (46, 46a, 46b), dans lequel l'axe (A) dudit au moins un aimant permanent (32) en particulier est orienté parallèlement à, en particulier coaxialement avec, un axe (A) de la bobine (46, 46a, 46b).

7. Mécanisme d'actionnement (27) selon l'une quelconque des revendications précédentes, dans lequel les au moins deux aimants permanents (32, 34) comportent au moins un aimant permanent (34) agencé dans une configuration dans laquelle un axe (B) s'étendant entre les pôles (34a, 34b) dudit aimant permanent (34) est orienté transversalement ou orthogonalement à une direction de déplacement de l'élément de mise en prise (29) .

8. Mécanisme d'actionnement (27) selon l'une quelconque des revendications précédentes,
comprenant un élément stationnaire (30) ou une culasse (40) logeant l'au moins une bobine électrique (46, 46a, 46b) et supportant, ou étant formé d'un seul tenant avec, au moins l'un des aimants permanents (32, 34).

9. Mécanisme d'actionnement (27) selon l'une quelconque des revendications précédentes,
comprenant un élément mobile (29) ou une culasse (35) supportant ou étant formé d'un seul tenant avec l'élément de mise en prise (29) et supportant ou étant formé d'un seul tenant avec au moins l'un des aimants permanents (32, 34).

10. Mécanisme d'actionnement (27) selon la revendication 8 ou 9, dans lequel au moins l'un des éléments (29, 30) ou des culasses (35, 40) a une section transversale circulaire, en particulier dans un plan s'étendant perpendiculairement à une direction de déplacement de l'élément de mise en prise (29).

11. Mécanisme d'actionnement (27) selon l'une quelconque des revendications 8 à 10, dans lequel au moins l'un des éléments (29, 30) ou des culasses (35, 40) a une cavité (37) ou une rainure (44) configurée pour recevoir l'au moins une bobine électrique (46, 46a, 46b) et/ou au moins l'un des aimants permanents (32, 34).

12. Mécanisme d'actionnement (27) selon l'une quelconque des revendications précédentes, dans lequel au moins l'un des aimants permanents (32, 34) a la forme d'un anneau ou d'un beignet.

13. Équipement de sécurité d'ascenseur (20), comprenant :
un dispositif de freinage (22) configuré pour freiner une cabine d'ascenseur (60) en venant en prise avec un élément de guidage (14, 15) d'un système d'ascenseur (2) ; et
un mécanisme d'actionnement (27) selon l'une quelconque des revendications précédentes ;
dans lequel le mécanisme d'actionnement (27) est couplé mécaniquement au dispositif de freinage (22) permettant au mécanisme d'actionnement (27) de déclencher le dispositif de freinage (22) en mettant en prise l'élément de mise en prise (29) avec un élément de guidage (14, 15) du système d'ascenseur (2) .

14. Système d'ascenseur (2), comprenant :
au moins une cabine d'ascenseur (60) configurée pour se déplacer le long d'au moins un élément de guidage (14) s'étendant le long d'une cage d'ascenseur (4) ; et
au moins un équipement de sécurité d'ascenseur (20) selon la revendication 13 ;
dans lequel l'équipement de sécurité d'ascenseur (20) est fixé au contrepoids (19) pour freiner le mouvement de l'au moins une cabine d'ascenseur (60).

15. Système d'ascenseur (2), comprenant :
au moins une cabine d'ascenseur (60) configurée pour se déplacer le long d'au moins un élément de guidage (14, 15) de cabine s'étendant le long d'une cage d'ascenseur (4) ;
au moins un contrepoids (19) se déplaçant simultanément et en sens opposé par rapport à la cabine d'ascenseur (60) le long d'au moins un élément de guidage (15) s'étendant le long d'une cage d'ascenseur (4) ; et
au moins un équipement de sécurité d'ascenseur (20) selon la revendication 13 ;
dans lequel l'équipement de sécurité d'ascenseur (20) est fixé à l'au moins un contrepoids (19) pour freiner le mouvement de l'au moins un contrepoids (19).
